# EUROPEAN PATENT SPECIFICATION

(11) **EP 1 844 660 B1**
(45) Date of publication and mention of the grant of the patent: **28.07.2010**
(21) Application number: 07425187.7
(22) Date of filing: 30.03.2007
(51) Int. Cl.: A23B 4/03, F26B 11/04

(54) **Improved apparatus for drying foodstuffs**
Verbesserte Vorrichtung zum Trocknen von Nahrungsmitteln
Appareil amélioré pour le séchage d'aliments

(30) Priority: 12.04.2006 IT RM20060211
(43) Date of publication of application: 17.10.2007
(73) Proprietor: Turatti s.r.l., 30014 Cavarzere (VE) (IT)
(72) Inventor: Turatti, Antonio, 30014 Cavarzese (VE) (IT)
(74) Representative: Iannone, Carlo Luigi

(56) References cited:
- EP-A- 1 512 333
- WO-A-03/103407
- CH-A- 425 429
- DE-A1- 3 020 082
- DE-A1- 4 435 810
- FR-A- 343 918
- US-A- 1 430 790
- US-A- 3 064 359
- "BARTLETT-SNOW ROTARY THERMAL PROCESSING EQUIPMENT AND SYSTEMS" ABB RAYMOND BULLETIN, no. 873R, 1990, pages 1-24, XP000826583

## Description

The present invention relates to an improved apparatus for drying foodstuffs.

More specifically, the invention relates to an apparatus of the above kind, particularly studied and realised for removing humidity from leaf products, permitting optimised power consumption for every situation.

As it is well known, many apparatuses or machines exist for drying leaf products, such as vegetables or fruit, or for removing water from the same. Particularly, different kind of said apparatuses or machines exist exploiting centrifugal force for removing said residual humidity.

Above mentioned machines are usually comprised of a rotating basket, with vertical or horizontal axis, containing the product to be dried. Said basket is driven by an electric, hydraulic or pneumatic motor. Drying cycle is a batch cycle, providing a basket loading step, a centrifugation step and a product discharge step.

Rotation speed and working time can be usually adjusted. Some of these machines are loaded and unloaded on the same side and thus mechanisms for upturning the same are provided. Other machines are loaded and unloaded from opposite ends.

Known machines providing electric motors usually use asynchronous three-phase motors. Said motors overheat at low speed due to their design criteria, i.e. during the loading and unloading steps, and, moreover, they have a peak of power absorption at the start, thus when beginning the centrifugation, with a very low torque generated.

In view of the above, known electric centrifugal apparatuses must provide oversized motors, with cooling device for operation at low speed. This increases their dimensions, thus making the same not convenient.

Furthermore, asynchronous three-phase motors must provided transmission pulleys for reduction of number of revolution, as well as electronic speed regulators (inverter), the adjustment range of which is in any case very limited (ratio between about 1 and about 3).

As far as centrifugal machines or apparatuses driven by hydraulic motors, it is known that they can have an even torque with low regime, but that they are huge, being activated by suitable stations. Therefore, they are more complex to be realised and assembled but, particularly, in case of oil leakages, they can contaminate the product.

US 3064359, CH 425429, CH 343 918, DE 4435810, EP 1512333,US 1430790 and WO 031103407 patents describe generally apparatuses suitable for drying foodstuffs comprising a perforated basket and automation system.

In view of the above it is object of the present invention that of providing an apparatus for removing surface humidity of different products by centrifugal force, having high capacity, reduced dimensions and driven by an electric motor.

Another object of the invention is that of providing an apparatus outputting a uniform torque with low regime.

It is therefore specific object of the present invention an improved apparatus for drying foodstuffs, comprising at least a centrifugation basket for drying said product by its rotation, the lateral surface of which is holed; a pin rotating coupled with said at least a centrifugation basket; and a motor, mechanically coupled with said rotation pin; said apparatus being characterised in that said motor is a asynchronous three-phase electric motor and in that it comprises means for controlling rotation of said motor for adjusting the torque output by said motor with respect to its rotation speed.

Always according to the invention, said control means can comprise an encoder for detection of the rotation speed or of the position of said motor.

Still according to the invention, said control means can comprise a feedback control device connected with said encoder for adjusting supply and/or power output to said motor on the basis of the value of the motor speed detected by said encoder.

Preferably, according to the invention, said apparatus can comprise a support housing, within which said at least a centrifugation basket is placed, rotating coupled with the same housing, said housing collecting liquid due to drying said product exiting through the holes on the lateral surface of said rotating centrifugation basket, said housing and said centrifugation basket realising a centrifugation assembly; at least an axis fixed to said housing; motion means mechanically coupled with said at least an axis, said motion means permitting rotation of said centrifugation basket with respect to its axis, in order to bring the same in the loading and unloading positions.

Furthermore, according to the invention, said motor can be placed between said housing and said centrifugation basket by a joint, said joint being fixed to said housing and rotating coupled with said rotation pin.

Always according to the invention, said motion means can comprise a motor, preferably an electric motor.

Preferably, according to the invention, said at least one axis can be a substantially horizontal axis.

Still according to the invention, said housing can comprise at least a discharge for outflow of said liquid arriving fro the product drying.

Preferably, according to the invention, said improved apparatus can comprise means for discharging the dried product, such as a conveyor belt.

Still according to the invention, said improved apparatus can comprise a structure for supporting said centrifugation assembly.

The present invention will be now described, for illustrative but not limitative purposes, according to its preferred embodiments, with particular reference to the figures of the enclosed drawings, wherein:
figure 1 shows a lateral view of drying apparatus for foodstuffs, particularly leaf products according to the present invention;
figure 2 shows a section front view of apparatus according to figure 1; and
figure 3 shows a lateral section view of the drying group of apparatus according to figure 1.

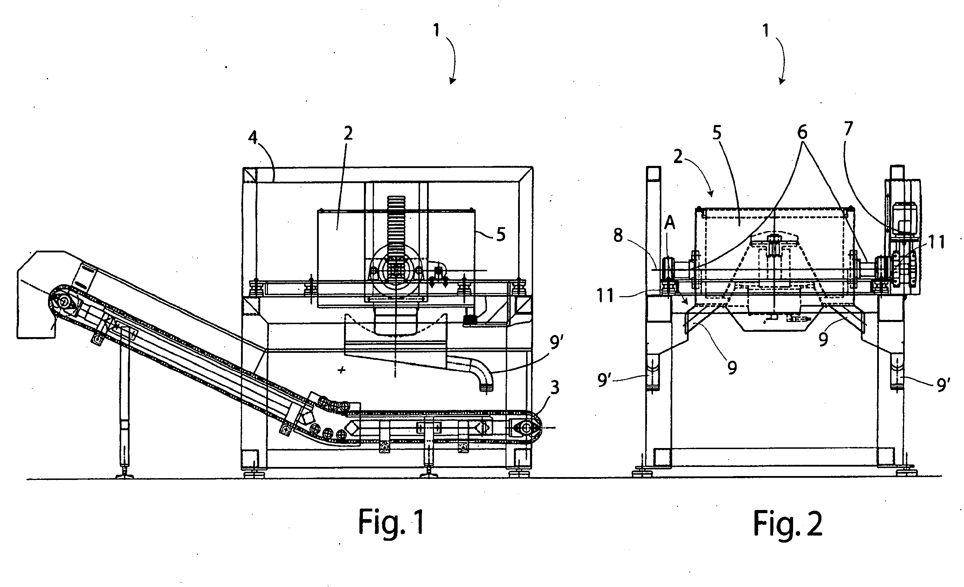

Making reference to figures 1 and 2 of the enclosed drawings, it is possible observing apparatus 1 for drying leaf products according to the invention.

Said apparatus 1 comprises a drying assembly 2, under which a product removal conveyor belt 3 is provided.

Said drying assembly is mounted on a support structure 4. It comprises a rotating centrifugation basket 5, mounted on substantially horizontal pins 6. Said pins 6 permit rotation of said centrifugation basket 5 according to direction A.

Said pins 6 permits to the centrifugation basket rotation about axis 8 during the unloading of the dried product by a motor 7.

Centrifugation basket 5 is holed on its surface (holes cannot be seen in the figures).

Discharge outlets 9 are provided under said centrifugation basket 5, connected with discharge cups, for outlet of water extracted from products during centrifugation.

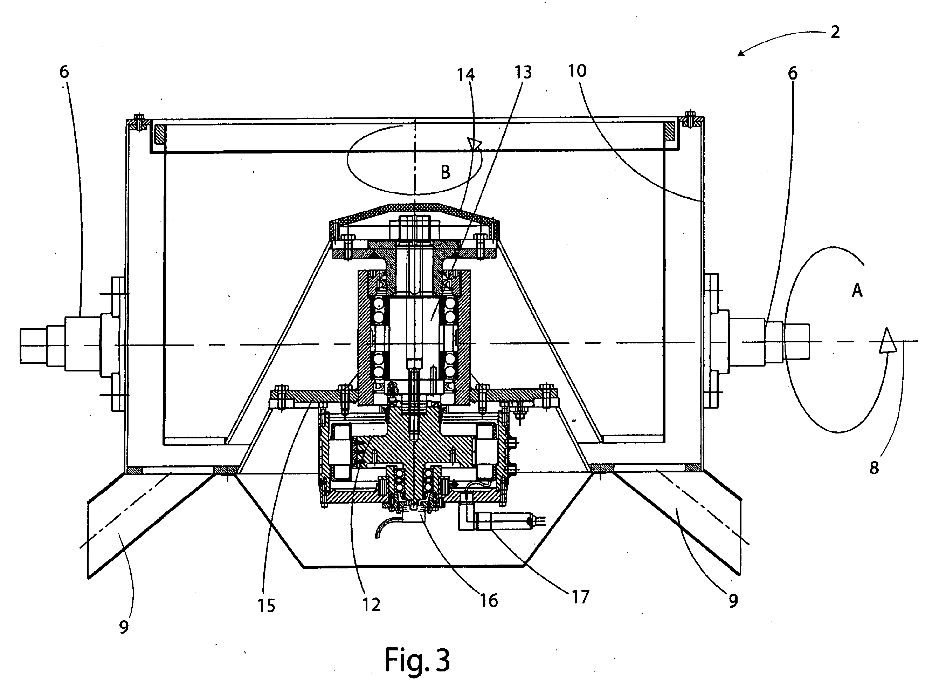

Making now reference to figure 3, it can be noted that centrifugation basket 5 is placed within a hosing housing 10, coupled with said pins 6, resting on supports 11.

Within inner volume of said centrifugation basket 5, between the same basket and said housing 10, it is provided a synchronous centrifugation electric motor 12, for rotating the centrifugation basket 5 according to direction B with respect to its symmetry axis.

Centrifugation basket 5 is connected with a rotation pin 13 by the upper part of a rotating joint 14. Outer part 15 of said rotating joint 14 is fixed on housing 10 along with motor 12. The whole drying assembly 2 can rotate about said horizontal axis 8 and about said pins 6.

Motor 12 is provided with an encoder 16 for controlling the position of the same motor 12, a power supply cable 17 and elements 18 for water cooling.

During the loading and centrifugation steps, said centrifugation basket 5 has its opening upward. When the centrifugation step is terminated, centrifugation basket upturns, rotating about axis 8 by said motor 7 acting on said pins 6, discharging the centrifuged product on the product removal conveyor belt 3.

Said centrifuged product is sent to the following workings by said product removal conveyor belt 3.

During the centrifugation step of the product contained within the centrifugation basket 5, carried out by said motor 12, water extracted from the product passes through the holes of the same centrifugation basket 5, collects within the housing 10 and outflows by outlets 9 and cups 9'.

Motor 12 is of the asynchronous three-phase type. It usually is used for high precision tools and in all those cases requiring a high torque at low regime along with a high precision of movements.

Encoder 17, permitting proper operation of said motor 12, is an electronic device. It permits detecting speed of rotating members, in this case synchronous three-phase motor 12, reading its position.

Said encoder 16 can be of many kinds. Opto-electronic encoders are widely used, permitting, by excitation of photo-diodes, detecting speed of a rotating member.

Encoder 16 is connected to a retroaction control circuit (not shown in the figures), connected to supply of said motor 12. particularly, once detected speed by said encoder 16, control circuit adjust power output to said motor 12, thus optimising torque output by the same. Particularly, it is possible obtaining keeping a constant torque of said motor 12 within a wide speed range (in the described embodiment between about 0 and 1000 rpm).

This kind of motors has a further positive feature. In the water cooled type, it has reduced dimensions, so as to be directly placed on the rotating pin 13 of the centrifugation basket.

These positive features, combined with a good design, permit realising a device with high capacity, high precision, reliability and reduced dimensions.

On the basis of the above specification, it can be noted that basic feature of the present invention is that of using a synchronous three-phase motor in a drying apparatus, employing a retroaction control device, permitting maintaining a constant torque in a very wide speed range.

An advantage of the present invention is due to the reduced dimensions of the apparatus.

## Claims

1. Apparatus (1) for drying foodstuffs, comprising:
- at least a centrifugation basket (5) for drying said product by its rotation, the lateral surface of said basket (5) being holed;
- a pin (13) rotating coupled with said at least a centrifugation basket (5); and
- a motor (12), mechanically coupled with said rotation pin (13);
said apparatus (1) being **characterised in that** said motor (12) is a synchronous three-phase electric motor (12), **in that** it comprises means (16) for controlling rotation of said motor (12) for adjusting the torque output by said motor (12) with respect to its rotation speed, said control means comprising an encoder (16) for detection of the rotation speed or of the position of said motor (12) and a feedback control device connected with said encoder (16) for adjusting supply and/or power output to said motor on the basis of the value of the motor (12) speed detected by said encoder (16).

2. Apparatus (1) according to claim 1, **characterised in that** said encoder (16) is an opto-electronic encoder.

3. Apparatus (1) according to one of the preceding claims, **characterised in that** said apparatus (1) comprises a support housing (10), within which said at least a centrifugation basket (5) is placed, rotating coupled with the same housing (10), said housing (10) collecting liquid extracted during drying step of said product exiting through the holes on the lateral surface of said rotating centrifugation basket (5), said housing (10) and said centrifugation basket (5) realising a centrifugation assembly (2); at least a pin (6) fixed to said housing (10); motion means (7) mechanically coupled with said at least a pin (6), said motion means (7) permitting rotation of said centrifugation basket (5) with respect to said pin (6), in order to bring the same in the loading and unloading positions.

4. Apparatus (1) according to claim 3, **characterised in that** said motor (12) is placed between said housing (10) and said centrifugation basket (5) by a joint (14), said joint (14) being fixed to said housing (10) and rotating coupled with said rotation pin (13).

5. Apparatus (1) according to claim 3 or 4, **characterised in that** said motion means comprise a motor (7), preferably an electric motor.

6. Apparatus (1) according to one of the preceding claims 3 - 5, **characterised in that** said at least one pin (6) is a substantially horizontal pin.

7. Apparatus (1) according to one of the preceding claims 3 - 6, **characterised in that** said housing (10) comprises at least a discharge (9) for outflow of said liquid arriving from the product drying step.

8. Apparatus (1) according to one of the preceding claims, **characterised in that** said it comprises means (3) for discharging the dried product.

9. Apparatus (1) according to claim 10, **characterised in that** said means for discharging the dried product are comprised of a conveyor belt (3).

10. Apparatus (1) according to one of the preceding claims 3 - 9, **characterised in that** it comprises a structure (4) for supporting said centrifugation assembly (2).

## Patentansprüche

1. Vorrichtung (1) zum Trocknen von Nahrungsmitteln, umfassend:
- zumindest einen Zentrifugationskorb (5) zum Trocknen des Produkts durch Drehung davon, wobei die Lateralfläche des Korbs (5) ausgehöhlt ist;
- einen Bolzen (13), drehgekoppelt mit dem zumindest einen Zentrifugationskorb (5); und
- einen Motor (12), mechanisch gekoppelt mit dem Drehbolzen (13);
wobei die Vorrichtung (1) **dadurch gekennzeichnet ist, dass** der Motor (12) ein Synchron-Drei-Phasen-Elektromotor (12) ist, **dadurch**, dass sie Mittel (16) zum Kontrollieren einer Drehung des Motors (12) zum Einstellen der Momentenausgabe durch den Motor (12) in Bezug auf die Drehgeschwindigkeit davon umfasst, wobei das Steuermittel einen Encoder (16) umfasst zur Detektion der Drehgeschwindigkeit oder der Position des Motors (12) und eine Rückkopplungssteuereinrichtung, verbunden mit dem Encoder (16), um eine Zufuhr und/oder eine Leistungsabgabe an den Motor auf der Basis des Werts der Geschwindigkeit des Motors (12), detektiert durch den Encoder (16), einzustellen.

2. Vorrichtung (1) gemäß Anspruch 1, **dadurch gekennzeichnet, dass** der Encoder (16) ein opto-elektronischer Encoder ist.

3. Vorrichtung (1) gemäß einem der vorhergehenden Ansprüche, **dadurch gekennzeichnet, dass** die Vorrichtung (1) ein Stützgehäuse (10) umfasst, in dem der zumindest eine Zentrifugationskorb (5) platziert ist, drehgekoppelt mit demselben Gehäuse (10), wobei das Gehäuse (10) Flüssigkeit sammelt, entnommen während eines Trocknungsschritts des Produkts, austretend durch die Löcher an der Lateralfläche des Drehzentrifugationskorbs (5), wobei das Gehäuse (10) und der Zentrifugationskorb (5) einen Zentrifugationsaufbau (2) realisieren; zumindest einen Bolzen (6), festgemacht an dem Gehäuse (10); Bewegungsmittel (7), mechanisch gekoppelt mit dem zumindest einen Bolzen (6), wobei die Bewegungsmittel (7) eine Drehung des Zentrifugationskorbs (5) in Bezug auf den Bolzen (6) erlauben, um denselben in die Lade- und Entladeposition zu bringen.

4. Vorrichtung (1) gemäß Anspruch 3, **dadurch gekennzeichnet, dass** der Motor (12) platziert ist zwischen dem Gehäuse (10) und dem Zentrifugationskorb (5) mittels eines Gelenks (14), wobei das Gelenk (14) festgemacht ist an dem Gehäuse (10) und drehgekoppelt ist mit dem Drehbolzen (13).

5. Vorrichtung (1) gemäß Anspruch 3 oder 4, **dadurch gekennzeichnet, dass** die Bewegungsmittel einen Motor (7) umfassen, vorzugsweise einen Elektromotor.

6. Vorrichtung (1) gemäß einem der vorhergehenden Ansprüche 3 - 5, **dadurch gekennzeichnet, dass** der zumindest eine Bolzen (6) ein im Wesentlichen horizontaler Bolzen ist.

7. Vorrichtung (1) gemäß einem der vorhergehenden Ansprüche 3 - 6, **dadurch gekennzeichnet, dass** das Gehäuse (10) zumindest eine Ausgabe (9) umfasst zum Ausfluss der Flüssigkeit, ankommend aus dem Produkttrocknungsschritt.

8. Vorrichtung (1) gemäß einem der vorhergehenden Ansprüche, **dadurch gekennzeichnet, dass** sie Mittel umfasst zur Ausgabe des getrockneten Produkts.

9. Vorrichtung (1) gemäß Anspruch 10, **dadurch gekennzeichnet, dass** die Mittel zur Ausgabe des getrockneten Produkts ein Förderband (3) umfassen.

10. Vorrichtung (1) gemäß einem der vorhergehenden Ansprüche 3 - 9, **dadurch gekennzeichnet, dass** sie eine Struktur (4) umfasst zum Stützen des Zentrifugationsaufbaus (2).

## Revendications

1. Appareil (1) pour sécher des denrées alimentaires, comprenant :
- au moins un panier de centrifugation (5) pour sécher ledit produit sous l'effet de sa rotation, la surface latérale dudit panier (5) étant pourvue de trous ;
- un arbre (13) couplé en rotation audit au moins un panier de centrifugation (5) ; et
- un moteur (12), couplé mécaniquement audit arbre de rotation (13) ;
ledit appareil (1) étant **caractérisé en ce que** ledit moteur (12) est un moteur électrique triphasé synchrone (12), **en ce qu'**il comprend des moyens (16) pour commander la rotation dudit moteur (12) afin d'ajuster le couple de sortie dudit moteur (12) par rapport à sa vitesse de rotation, lesdits moyens de commande comprenant un codeur (16) pour détecter la vitesse de rotation ou la position dudit moteur (12) et un dispositif d'asservissement connecté audit codeur (16) pour ajuster l'alimentation et/ou la puissance fournie audit moteur en fonction de la valeur de la vitesse du moteur (12) détectée par ledit codeur (16).

2. Appareil (1) selon la revendication 1, **caractérisé en ce que** ledit codeur (16) est un codeur optoélectronique.

3. Appareil (1) selon l'une des revendications précédentes, **caractérisé en ce que** ledit appareil (1) comprend un carter de support (10), dans lequel est placé ledit au moins un panier de centrifugation (5), couplé en rotation à ce carter (10), ledit carter (10) collectant le liquide extrait pendant l'étape de séchage dudit produit, sortant par les trous formés dans la surface latérale dudit panier de centrifugation (5) tournant, ledit carter (10) et ledit panier de centrifugation (5) formant un ensemble de centrifugation (2); au moins un arbre (6) fixé audit carter (10) ; des moyens de déplacement (7) couplés mécaniquement audit au moins un arbre (6), lesdits moyens de déplacement (7) permettant la rotation dudit panier de centrifugation (5) par rapport audit arbre (6) afin de l'amener aux positions de chargement et de déchargement.

4. Appareil (1) selon la revendication 3, **caractérisé en ce que** ledit moteur (12) est placé entre ledit carter (10) et ledit panier de centrifugation (5) par une articulation (14), ladite articulation (14) étant fixée audit carter (10) et étant couplée en rotation audit arbre de rotation (13).

5. Appareil (1) selon la revendication 3 ou 4, **caractérisé en ce que** lesdits moyens de déplacement comprennent un moteur (7), de préférence un moteur électrique.

6. Appareil (1) selon l'une quelconque des revendications 3 à 5, **caractérisé en ce que** ledit au moins un arbre (6) est un arbre essentiellement horizontal.

7. Appareil (1) selon l'une quelconque des revendications 3 à 6, **caractérisé en ce que** ledit carter (10) comprend au moins une évacuation (9) pour la sortie dudit liquide provenant de l'étape de séchage du produit.

8. Appareil (1) selon l'une quelconque des revendications précédentes, **caractérisé en ce qu'**il comprend des moyens (3) pour décharger le produit séché.

9. Appareil (1) selon la revendication 10, **caractérisé en ce que** lesdits moyens pour décharger le produit séché sont constitués d'une courroie transporteuse (3).

10. Appareil (1) selon l'une quelconque des revendications 3 à 9, **caractérisé en ce qu'**il comprend une structure (4) pour supporter ledit ensemble de centrifugation (2).
